# EUROPÄISCHE PATENTSCHRIFT

(11) **EP 2 019 778 B1**
(45) Veröffentlichungstag und Bekanntmachung des Hinweises auf die Patenterteilung: **29.07.2009**
(21) Anmeldenummer: 07725494.4
(22) Anmeldetag: 23.05.2007
(51) Int. Cl.: B64D 13/00, F24F 13/068

(54) **VORRICHTUNG ZUR ERHÖHUNG DER INDIVIDUELLEN BEHAGLICHKEIT IN EINEM FLUGZEUG**
DEVICE FOR THE IMPROVEMENT OF INDIVIDUAL COMFORT IN AN AIRPLANE
DISPOSITIF D'AUGMENTATION DU BIEN-ÊTRE INDIVIDUEL DANS UN AVION

(30) Priorität: 24.05.2006 DE 102006024383
(43) Veröffentlichungstag der Anmeldung: 04.02.2009
(73) Patentinhaber: Fraunhofer-Gesellschaft zur Förderung der angewandten Forschung e.V., 80686 München (DE)
(72) Erfinder: MAYER, Erhard, 83607 Holzkirchen (DE); HOLM, Andreas, 83703 Gmund (DE); GRÜN, Gunnar, 80639 München (DE)
(86) Internationale Anmeldenummer: PCT/EP2007/004594
(87) Internationale Veröffentlichungsnummer: WO 2007/134858

(56) Entgegenhaltungen:
- EP-A2- 0 292 033
- EP-A2- 1 167 184
- DE-A1- 3 605 539
- DE-C1- 19 502 658
- GB-A- 1 204 594

## Beschreibung

### Technisches Gebiet

Die Erfindung betrifft eine Vorrichtung zur Erhöhung der thermischen Behaglichkeit und zur Senkung gesundheitlicher Probleme in einem Flugzeug.

### Stand der Technik

Um das Fliegen für die Passagiere angenehm zu gestalten und Ihre Gesundheit zu schonen, wird in Verkehrsflugzeugen ein beträchtlicher Aufwand getrieben, um behagliche Bedingungen zu schaffen. Ein wesentlicher Gesichtpunkt hierbei ist ein angenehmes Klima. Dabei ist für ausreichende Frischluft zu sorgen. Insbesondere darf die Luft im Flugzeug einen vorgegebenen CO₂-Anteil nicht übersteigen. Außerdem soll eine angenehme Temperatur und eine ausreichende Feuchte der Luft in der Flugzeugkabine gewährleistet sein. In der Regel wird von der Decke der Fahrgastkabine Luft in die Fahrgastkabine geblasen. Dazu wird Außenluft, welche angesaugt wird, entsprechend aufbereitet. Zudem kann die Außenluft mit einem Anteil an Umluft, welche ebenso aufzubereiten ist, gemischt werden. Damit durch Zumischung von Umluft kein zu hoher CO₂ - Wert erreicht wird, wurde in der WO99/48756 vorgeschlagen, einen CO₂ -Sensor einzusetzen. In der Regel ist die Fahrgastkabine zu kühlen. Einerseits erfolgt durch die hohe Sonneneinstrahlung eine Erwärmung. Bei gut besetzter Fahrgastkabine erfolgt auch eine nicht unerhebliche Erwärmung durch die Fahrgäste selbst. Zur Kühlung wird angesaugte Außenluft, welche kalt ist, in die Fahrgastkabine eingebracht. Diese Luft ist nicht nur kalt sondern auch sehr trocken. Daher muss Feuchte zugeführt werden. Zu diesem Zweck ist es erforderlich Wasser in die Zuluft zu geben. Dieses Wasser muss mitgeführt werden und führt zu zusätzlichem Gewicht, welches die Treibstoffkosten erhöht. Ein weiteres Problem ist, dass die Passagiere unterschiedliche Wünsche hinsichtlich Temperatur und Feuchtigkeit haben. Die bisherige zentrale Belüftung gestattet kaum eine Berücksichtigung individueller Wünsche der Passagiere. Dies betrifft ebenso individuelle Wünsche der Passagiere hinsichtlich Beleuchtung, Schallschutz und anderer Faktoren, welche die Behaglichkeit beeinflussen. Zur individuellen Einstellung der Belüftung ist aus der US 6,719,623 B1 bekannt, eine an der Decke befindliche Düse so auszugestalten, dass deren Richtung und der Volumenstrom vom Passagier eingestellt werden kann. Damit kann individuellen Wünschen zwar Rechnung getragen werden. Allerdings wird von einer Düse an der Decke auch der benachbarte Passagier beeinflusst. Die hohe Luftgeschwindigkeit führt meist zu Zugbelästigungen. Aus der US 2006/ 0022087 A1 ist eine Einrichtung bekannt, die dazu dient, dass sich das Flugzeugpersonal ausruhen kann. Diese Einrichtung weist eine Decke auf, deren Abstand zum sich darin ausruhenden Menschen veränderlich ist. Damit kann die Behaglichkeit des sich ausruhenden Menschen beeinflußt werden. Aus der DE 195 02 658 C1, welche den nächstliegenden Stand der Technik darstellt und den Oberbegriff des Anspruchs 1 offenbart, ist eine überhalb dem Passagier angeordente Versorgungseinheit bekannt, die unter anderem Luftdüsen aufweist. Diese Versorgungseinheit kann zur Beladung der überhalb dem Passagier angeordneten Gepäckablage bewegt werden. Individuellen Wünschen der Passagiere hinsichtlich Beleuchtung, Schallschutz und anderer Faktoren, welche die Behaglichkeit beeinflussen, kann damit aber nicht zielgerichtet Rechnung getragen werden.

### Beschreibung

Der vorliegenden Erfindung liegt daher die Aufgabe zugrunde, die Nachteile des Standes der Technik zu überwinden und eine Vorrichtung bereit zu stellen, welche es gestattet, die für das Wohlbefinden der Passagiere wichtigen Kenngrößen, insbesondere die klimatischen Größen, für die Passagiere möglichst individuell einstellen zu können. Die Lösung dieser Aufgabe ist in Anspruch 1 angegeben. Vorteilhafte Weiterentwicklungen finden sich in den Unteransprüchen.

Vorgeschlagen wird eine Vorrichtung zur Erhöhung der Behaglichkeit in einem Flugzeug, die zwischen der Deckenverkleidung der Kabine und einem Passagier angeordnet ist und eine dem Passagier zugewandte Fläche aufweist, wobei der Abstand zwischen der Fläche und dem Passagier veränderbar ist, wobei die Vorrichtung so gestaltet ist, dass die, insbesondere thermische Behaglichkeit des Passagiers beeinflusst werden kann. Eine nähere Definition für den Begriff der Behaglichkeit findet sich in "Taschenbuch für Heizung+Klima Technik 2000" von Recknagel, Sprenger Schramek, Seiten 50 bis 75. Kurz zusammengefasst ist Behaglichkeit in einem Bereich, dem sogenannten Behaglichkeitsbereich gegeben, in dem sich der Mensch am wohlsten fühlt. Für diesen Bereich gibt es keine festen Grenzen. Er hängt vielmehr vom einzelnen Menschen ab. Für die vorliegend im Vordergrund stehende thermische Behaglichkeit kommt es neben der Kleidung und der körperlichen Aktivität entscheidend auf die Lufttemperatur sowie die Gleichmäßigkeit derselben, die Luftfeuchte, die Luftbewegung sowie die Temperaturen der Umschließungsflächen an.

Die vorgeschlagene Vorrichtung gestattet eine individuelle Beeinflussung der Behaglichkeit des jeweiligen Passagiers. Durch einen niedrigen Abstand zwischen Passagier und der dem Passagier zugewandten Fläche ist die Beeinflussung hoch. Ein veränderlicher Abstand hat hierbei den Vorteil, dass nur dann ein niedriger Abstand gewählt wird, wenn dies vom Passagier auch gewünscht wird. Wenn der Passagier beispielsweise aufstehen möchte, ist der Abstand zwischen der dem Passagier zugewandten Fläche und dem Passagier höher zu wählen. Möchte der Passagier hingegen von der Beeinflussung durch die Vorrichtung profitieren, etwa wenn er Luft zugeführt bekommen möchte, ist der Abstand zwischen der dem Passagier zugewandten Fläche und dem Passagier niedrig zu wählen. Das Vorsehen einer Fläche ermöglicht eine Abschirmung des Passagiers von den Einflüssen der Fahrgastkabine, etwa Luftzug, Helligkeit oder Lärm. An der Fläche können auch Fernsehmonitore oder dergleichen angebracht oder integriert werden. Die Veränderung des Abstands kann mechanisch durch den Passagier erfolgen. Es ist aber auch ein motorischer, in der Regel elektrischer Antrieb möglich, welcher vom Passagier bedient werden kann. In der Lehne des Sitzes kann beispielsweise ein Bedienfeld vorgesehen werden.

Zusätzlich weist die Vorrichtung Einbauten auf, mit denen dem Passagier durch die Fläche Luft, insbesondere Luft mit gewünschten Eigenschaften, etwa gewünschter Temperatur und/oder gewünschter Feuchte zugeführt werden kann. Damit wird erreicht, dass der Passagier vorwiegend die Luft aus der Vorrichtung, gemischt mit der Luft, welche er ausatmet, in seinem Gesichtsfeld hat. Der Luftaustausch in dem Bereich, der sich unmittelbar vor dem Gesicht des Passagiers befindet, kann reduziert werden. Damit ist in der Luft vor dem Gesichtsfeld des Passagiers ein höherer Anteil der von ihm ausgeatmeten Luft vorhanden. Diese Luft ist durch die Atmung des Passagiers befeuchtet. Damit kann die zuzuführende Feuchtigkeit reduziert werden. Es muss weniger Wasser zur Befeuchtung der Luft mitgeführt werden. Die Abfuhr der verbrauchten Luft kann wie üblich an seitlich am Boden angebrachten Abfuhrkanälen erfolgen. Damit erfolgt ein Luftstrom aus der Fläche der Vorrichtung vorbei am Passagier an den Boden und anschließend eine Strömung am Boden zu den Abführkanälen. Die zugeführte Luft kann aus einem in der Decke befindlichen Zuluftsystem genommen werden. Selbstverständlich ist es weiterhin möglich und sinnvoll auch über die Decke konventionell Luft der Fahrgastkabine zuzuführen, etwa über den Gängen. In der Regel sollte in den Gängen die Temperatur niedriger sein als an den Sitzen, da sich das Personal in den Gängen bewegt und eine niedrigere Temperatur wünscht als die sitzenden Passagiere. Dazu ist es sinnvoll, im Belüftungssystem zentral kühle Luft bereitzustellen, welche dann individuell erwärmt werden kann, je nach Anforderung des einzelnen Passagiers. Ein weiterer Vorteil der Verteilung der Luft über die Fläche, welche dem Passagier zugewandt ist, ergibt sich daraus, dass durch diese großflächige Verteilung der Passagier nur einer schwachen Luftbewegung, aber keinem lästigen Zug ausgesetzt ist. Derselbe Luftmassenstrom kann beim Ausströmen über eine große Fläche mit niedriger Geschwindigkeit erfolgen. Bei den bekannten Düsen ist häufig ein lästiger Zug unvermeidlich. Dieser lästige Zug soll durch eine großflächige Verteilung vermieden werden. Um die Luft großflächig zu verteilen, ist eine Fläche mit vielen Löchern erforderlich, durch die die Luft strömen kann. Der Abstand zwischen den Löchern sollte dabei möglichst gering sein und maximal 5 cm nicht übersteigen. Ideal ist ein sehr niedriger Abstand im Bereich weniger mm. So kann etwa ein Plexiglas mit vielen kleinen Löchern im Abstand von wenigen Millimetern eingesetzt werden. Eine geeignete Ausführungsform ist ein luftdurchlässiges Textilgewebe. Soweit man bei einem Textilgewebe noch von Löchern sprechen kann, liegt deren Abstand häufig unterhalb einem Millimeter. Ein Textilgewebe kann zugleich auch als Filter für die zugeführte Luft dienen. Durch die bereits erwähnte niedrige Geschwindigkeit der durchströmenden Luft kann der Durchströmungswiderstand niedrig gehalten werden. Ferner wird durch die vorgeschlagen Vorrichtung vermieden, dass Luft eingeatmet wird, welche aus dem Bereich benachbarter Passagiere stammt. Dies senkt die Gefahr der Übertragung ansteckender Krankheiten. Auch eine eventuelle Belastung mit unangenehmen Gerüchen wird reduziert.

In einer vorteilhaften Weiterentwicklung weist die Fläche einen hohen Absorptionsgrad, bevorzugt einen Absorptionsgrad größer 0,8 für thermische Strahlung, insbesondere für thermische Strahlung in einem Wellenlängenbereich von 750 nm bis 1 mm auf. Auf diese Weise ist möglich, dass der Passagier eine ihm angenehme Temperaturstrahlung verspürt. Wünscht der Passagier beispielsweise eine Kühlung so wird die von ihm auf die Fläche ausgesandte Strahlung dort absorbiert. Auf Grund der niedrigen Temperatur der Fläche wird nur eine schwächere Temperaturstrahlung an den Passagier zurückgestrahlt. Bekanntlich stimmen Absorptions- und Emissionsgrad für dieselbe Wellenlänge überein. Wünscht der Passagier, einer stärkeren thermischen Strahlung ausgesetzt zu sein, so kann dies durch eine entsprechend warme Fläche erfolgen, welche dem Passagier Strahlung zuführt. Zu den Details wird auf Taschenbuch für Heizung+Klima Technik 2000" von Recknagel, Sprenger Schramek, Seiten 53 bis 57 verwiesen.

Wenn die Vorrichtung Einbauten aufweist, welche eine Beleuchtung des Passagiers und/oder des Bereichs vor dem Passagiers ermöglicht, so kann jeder Passagier die individuell gewünschte Helligkeit erhalten, ohne dass andere Passagiere derselben Helligkeit ausgesetzt werden. Insbesondere bei Langstreckenflügen, auf welchen die Passagiere Zeiten zum Schlafen nutzen wollen, ist dies von deutlichem Vorteil. Außerdem kann der Passagier mit einer gewünschten, individuell einstellbaren Farbe, bestrahlt werden. Damit kann das auch von der Farbe abhängige Wohlbefinden verbessert werden. Durch geeignete Farbwahl kann ferner die Beleuchtung dem zirkadianen Rhythmus der Passagiere angepasst und damit die Überwindung des Jetlags erleichtert werden.

Denkbar ist auch, die oben genannte Vorrichtung als Schalldämpfer auszubilden, d.h. an der dem Passagier zugewandten Fläche für eine Dämpfung des Schalls zu sorgen. Damit ist es für den Passagier ruhiger. Mit geeigneten Vorrichtungen, vorzugsweise Lautsprechern, die zum Fluglärm gegenphasigen Schall erzeugen, kann auch aktive Schalldämpfung betrieben werden, wodurch der Lärmpegel im Flugzeug nach individuellen Wünschen reduziert werden kann. Durch den Einbau der Schalldämpfungseinrichtungen sowie der Beschallungseinrichtungen an der dem Passagier zugewandten Fläche kann den individuellen Wünschen der einzelnen Passagiere entsprochen werden, ohne dass benachbarte Passagier über Gebühr beeinträchtigt würden.

Es ist günstig, wenn die Vorrichtung elektrisch beheizbar ist. Damit ist es möglich, die dem Passagier zuzuführende Luft elektrisch zu beheizen. Wie bereits erwähnt, kann damit in der zentralen Luftzufuhr für die Fahrgastkabine eine kühle Luft bereitgestellt werden, die nach den individuellen Wünschen der Passagiere erwärmt werden kann. Durch die elektrische Beheizung kann auch die dem Passagier zugewandte Fläche erwärmt werden, wodurch die oben erwähnte stärkere thermische Strahlung erreicht werden kann.

Vorzugsweise ist die dem Passagier zugewandte Fläche so ausgeführt, dass sie zur Decke hin gewölbt ist. Damit kann dem Passagier eine große Fläche zugewandt werden, ohne dass er sich beengt fühlt. Außerdem kann damit der Einfluss der Fläche auf den benachbarten Passagier reduziert werden.

Eine Ausführungsform sieht vor, dass die Fläche zur Gewährleistung eines freien Blicks in Längsrichtung der Flugzeugkabine allenfalls geringe, vorzugsweise keine Bereiche aufweist, deren Normale mit der Längsrichtung der Flugzeugkabine einen Winkel kleiner als 30° einschließt. Dies wird etwa erreicht, wenn die Fläche die Form eines zur Decke hin gewölbten Halbrohrs aufweist. Eine ausschließlich auf eine Verbesserung der Klimatisierung hin ausgelegte Vorrichtung sähe auch Flächen, welche senkrecht zur Flugrichtung stehen vor. Dies würde aber den freien Blick in der Kabine einschränken, wodurch bei Passagieren ein subjektives Gefühl der Beklemmung ausgelöst werden könnte. Insbesondere im Hinblick auf die objektiv beengten Verhältnisse in einem Flugzeug ist dies möglicherweise unerwünscht.

Eine optimale Klimatisierung wird dadurch erreicht, dass die Fläche nach Art einer Glocke ausgebildet ist. Damit kann sie dem Passagier gleichsam übergestülpt werden.

Es ist günstig, wenn die Fläche eine Größe von etwa einem halben Quadratmeter aufweist.

Die Vorrichtung sollte so ausgelegt sein, dass bei Bedarf eine Sauerstoffmaske zum Passagier geführt werden kann. Bisher ist es üblich, dass Sauerstoffmasken, welche in Notfällen erforderlich sind, von der Decke zum Passagier geführt werden. Die hier vorgestellte Vorrichtung würde dies womöglich verhindern. Deshalb sollte die Funktion des Bereitstellens einer Sauerstoffmaske in die Vorrichtung integriert werden.

In einer Weiterentwicklung ist vorgesehen, dass ohne Mitwirkung des Passagiers der Abstand zwischen der Fläche und dem Passagier erhöht werden kann. Damit ist es möglich, etwaige Sicherheitsanforderung zu erfüllen, welche in bestimmten Flugsituationen, etwa beim Starten oder Landen, eine weitgehende Kopffreiheit des Passagiers verlangen.

## Patentansprüche

1. Vorrichtung zur Erhöhung der Behaglichkeit in einem Flugzeug, die zwischen der Deckenverkleidung der Kabine und einem Passagier angeordnet ist und eine dem Passagier zugewandte Fläche aufweist, wobei der Abstand zwischen der Fläche und dem Passagier veränderbar ist, wobei die Vorrichtung so gestaltet ist, dass die, insbesondere thermische, Behaglichkeit des Passagiers beeinflusst werden kann, **dadurch gekennzeichnet, dass** die Vorrichtung Einbauten aufweist, mit denen dem Passagier durch die Fläche Luft, insbesondere Luft mit gewünschten Eigenschaften, etwa gewünschter Temperatur und/oder gewünschter Feuchte, großflächig verteilt zugeführt werden kann.

2. Vorrichtung nach Anspruch 1, **dadurch gekennzeichnet, dass** die Fläche einen hohen Absorptionsgrad, bevorzugt einen Absporptionsgrad größer 0,8 für thermische Strahlung, insbesondere für thermische Strahlung in einem Wellenlängenbereich von 750 nm bis 1 mm hat

3. Vorrichtung nach einem der vorhergehenden Ansprüche, **dadurch gekennzeichnet, dass** die Vorrichtung Einbauten aufweist, welche eine Beleuchtung des Passagiers und/oder des Bereichs vor dem Passagier ermöglicht.

4. Vorrichtung nach einem der vorhergehenden Ansprüche, **dadurch gekennzeichnet, dass** die Vorrichtung als aktiver oder passiver Schalldämpfer ausgebildet ist.

5. Vorrichtung nach einem der vorhergehenden Ansprüche, **dadurch gekennzeichnet, dass** die Vorrichtung elektrisch beheizbar ist.

6. Vorrichtung nach einem der vorhergehenden Ansprüche, **dadurch gekennzeichnet, dass** die Fläche zur Decke gewölbt ist.

7. Vorrichtung nach einem der vorhergehenden Ansprüche, **dadurch gekennzeichnet, dass** die Fläche zur Gewährleistung eines freien Blicks in Längsrichtung der Flugzeugkabine allenfalls geringe, vorzugsweise keine, Bereiche aufweist, deren Normale mit der Längsrichtung der Flugzeugkabine einen Winkel kleiner als 30° einschließt.

8. Vorrichtung nach einem der Ansprüche 1 bis 6, **dadurch gekennzeichnet, dass** die Fläche nach Art einer Glocke ausgebildet ist

9. Vorrichtung nach einem der vorhergehenden Ansprüche, **dadurch gekennzeichnet, dass** die Fläche eine Größe von etwa einem halben Quadratmeter aufweist.

10. Vorrichtung nach einem der vorhergehenden Ansprüche, **dadurch gekennzeichnet, dass** bei Bedarf eine Sauerstoffmaske zum Passagier geführt werden kann.

11. Vorrichtung nach einem der vorhergehenden Ansprüche, **dadurch gekennzeichnet, dass** ohne Mitwirkung des Passagiers der Abstand zwischen der Fläche und dem Passagier erhöht werden kann.

## Claims

1. Device for increasing the comfort in an aircraft, which is arranged between the ceiling paneling of the cabin and a passenger and which has a surface facing the passenger, wherein the distance between the surface and the passenger is changeable, wherein the device is designed such that in particular the thermal comfort of the passenger can be affected, **characterized in that** the device has installations with which the passenger can be supplied through the surface with air, in particular air with desired properties, such as desired temperature and/or desired humidity, distributed over a large area.

2. Device according to claim 1, **characterized in that** the surface has a high absorptive capacity, preferably an absorptive capacity of greater than 0.8 for thermal radiation, in particular for thermal radiation in a wavelength range of 750 nm to 1 mm.

3. Device according to one of the preceding claims, **characterized in that** the device has installations that render possible an illumination of the passenger and/or the area in front of the passenger.

4. Device according to one of the preceding claims, **characterized in that** the device is embodied as an active or passive sound damper.

5. Device according to one of the preceding claims, **characterized in that** the device can be heated electrically.

6. Device according to one of the preceding claims, **characterized in that** the surface is curved towards the ceiling.

7. Device according to one of the preceding claims, **characterized in that** to guarantee a free view in the longitudinal direction of the aircraft cabin the surface has at the most small, preferably no areas, the perpendicular of which forms an angle of less than 30° with the longitudinal direction of the aircraft cabin.

8. Device according to one of claims 1 through 6, **characterized in that** the surface is embodied in the manner of a bell.

9. Device according to one of the preceding claims, **characterized in that** the surface has a size of approx. half a square meter.

10. Device according to one of the preceding claims, **characterized in that**, if necessary, an oxygen mask can be supplied to the passenger.

11. Device according to one of the preceding claims, **characterized in that** the distance between the surface and the passenger can be increased without involvement of the passenger.

## Revendications

1. Dispositif pour augmenter le confort à bord d'un avion, dispositif installé entre l'habillage du plafond de la cabine et un passager et présentant une surface tournée vers le passager,
la distance entre la surface et le passager étant variable,
le dispositif étant conçu pour permettre d'influencer notamment le confort thermique du passager,
**caractérisé en ce que**
le dispositif comporte des composants par lesquels le passager reçoit de l'air par l'intermédiaire de la surface, notamment de l'air ayant des propriétés souhaitées telles que la température souhaitée et/ou l'humidité souhaitée, cet air étant fourni selon une répartition en grande surface.

2. Dispositif selon la revendication 1,
**caractérisé en ce que**
la surface a un degré d'absorption élevé, de préférence un degré d'absorption supérieur à 0,8 pour le rayonnement thermique, notamment pour le rayonnement thermique dans une plage de longueurs d'onde de 750 nm jusqu'à 1 mm.

3. Dispositif selon les revendications précédentes,
**caractérisé en ce que**
le dispositif comporte des composants permettant d'éclairer le passager et/ou la zone devant le passager.

4. Dispositif selon les revendications précédentes,
**caractérisé en ce que**
le dispositif est réalisé sous la forme d'un atténuateur phonique actif ou passif.

5. Dispositif selon les revendications précédentes,
**caractérisé en ce que**
le dispositif est chauffé électriquement.

6. Dispositif selon les revendications précédentes,
**caractérisé en ce que**
la surface est bombée en direction du plafond.

7. Dispositif selon les revendications précédentes,
**caractérisé en ce que**
pour dégager la vue dans la direction longitudinale de la cabine de l'avion, la surface présente dans tous les cas de petites zones, de préférence pas de zone, dont la normale par rapport à la direction longitudinal de la cabine d'avion, fait un angle inférieur à 30°.

8. Dispositif selon les revendications 1 à 6,
**caractérisé en ce que**
la surface est réalisée en forme de cloche.

9. Dispositif selon les revendications précédentes,
**caractérisé en ce que**
la surface a une taille qui correspond sensiblement à un demi-mètre carré.

10. Dispositif selon les revendications précédentes,
**caractérisé en ce qu'**
à la demande, un masque à oxygène est délivré au passager.

11. Dispositif selon les revendications précédentes,
**caractérisé en ce que**
la distance entre la surface et le passager peut être augmentée sans l'intervention du passager.
